# EUROPEAN PATENT APPLICATION

(11) **EP 3 852 382 A1**
(43) Date of publication of application: **21.07.2021**
(21) Application number: 19866964.0
(22) Date of filing: 16.09.2019
(51) Int. Cl.: H04N 21/472

(54) **CHANNEL PLAYBACK METHOD AND RELATED EQUIPMENT**

(30) Priority: 30.09.2018 CN 201811162705
(71) Applicant: HUAWEI TECHNOLOGIES CO., LTD., Shenzhen, Guangdong 518129 (CN)
(72) Inventor: QU, Xiaogang, Shenzhen, Guangdong 518129 (CN); HU, Zifu, Shenzhen, Guangdong 518129 (CN)
(74) Representative: MERH-IP Matias Erny Reichl Hoffmann Patentanwälte PartG mbB
(86) International application number: PCT/CN2019/105974
(87) International publication number: WO 2020/063382

(57) **Abstract**

This application provides a channel playing method and a related device, to collect statistics on channel playing information of a terminal, and update a mosaic channel bitstream and a played image based on a statistical result. In this way, subchannels of a mosaic channel are updated based on the playing information of the terminal, and the terminal device plays an adapted mosaic channel, to improve user experience. The method includes: obtaining, by a video server, channel playing statistical information of a terminal, where the channel playing statistical information includes a plurality of channel identifiers; updating, by the video server, subchannels of a mosaic channel based on the channel identifiers in the channel playing statistical information; and sending, by the video server, a channel generation instruction to a mosaic generator, where the channel generation instruction is used to instruct the mosaic generator to generate a mosaic channel bitstream that includes the updated subchannels and channel identifiers of the updated subchannels, and the channel generation instruction includes the channel identifiers of the updated subchannels.

## Description

This application claims priority to Chinese Patent Application No. 201811162705.8, filed with the China National Intellectual Property Administration on September 30, 2018 and entitled "CHANNEL PLAYING METHOD AND RELATED DEVICE", which is incorporated herein by reference in its entirety.

### TECHNICAL FIELD

This application relates to the field of video playing, and in particular, to a channel playing method and a related device.

### BACKGROUND

A system mosaic channel is a channel that contains information about a plurality of subchannels, in other words, the information about the plurality of subchannels is displayed on a same screen. For example, when a terminal device switches to a mosaic channel, a plurality of small window images are displayed on the terminal device. Each small window image corresponds to a subchannel. The terminal device may select one of small windows, and then switch to a corresponding channel for full-screen playing.

Usually, an operator determines the information about the subchannels of the system mosaic channel. Therefore, video content played on all terminals that play a same mosaic channel is the same. Therefore, how to adapt a mosaic channel to different terminals becomes an urgent problem to be resolved.

### SUMMARY

This application provides a channel playing method and a related device, to collect statistics on channel playing information of a terminal, and update a mosaic channel bitstream and a played image based on a statistical result. In this way, subchannels of a mosaic channel are updated based on the playing information of the terminal, and the terminal device plays an adapted mosaic channel, to improve user experience.

In view of this, a first aspect of this application provides a channel playing method, including:

A video server obtains channel playing statistical information of a terminal. The channel playing statistical information includes a plurality of channel identifiers. The video server update subchannel of a mosaic channel based on the channel identifiers in the channel playing statistical information. The video server sends a channel generation instruction to a mosaic generator, to instruct the mosaic generator to generate a mosaic channel bitstream that includes the updated subchannel and channel identifiers of the updated subchannel. The channel generation instruction includes the channel identifiers of the updated subchannels.

In an implementation of this application, the video server updates the subchannels of the mosaic channel by using the channel identifiers in the channel playing information of the terminal, and sends the channel generation instruction to the mosaic generator, so that the mosaic generator generates the mosaic channel bitstream based on the updated subchannels of the mosaic channel and the channel identifiers of the updated subchannels. After receiving the mosaic channel bitstream, the terminal may play the mosaic channel bitstream. Therefore, the video server may update the subchannels of the mosaic channel based on the channel playing statistical information of the terminal, so that the subchannels of the mosaic channel are related to the channel playing statistical information of the terminal, and the mosaic channel can adapt to different terminals.

Optionally, in some possible implementations, the channel playing statistical information further includes play frequencies of a plurality of channels. The updating, by the video server, subchannels of a mosaic channel based on the channel identifiers in the channel playing statistical information may include: updating, by the video server, the subchannels of the mosaic channel based on the play frequencies of the plurality of channels and the channel identifiers.

In an implementation of this application, the video server may update an identifier of the mosaic channels based on the play frequencies and channel identifiers of the plurality of channels. "A plurality of' in the implementations of this application means two or more. Therefore, the subchannels of the mosaic channel may be updated based on the playing frequencies of the channels of the terminal, and channels with relatively high playing frequencies are updated to the subchannels of the mosaic channel. If channel playing frequencies of terminals are different, mosaic channel bitstreams played on the terminals are also different. In this way, the mosaic channel can adapt to different terminals, to improve user experience.

Optionally, in some possible implementations, the method may further include:

The video server sends a mosaic channel list to the terminal. The mosaic list includes information about the mosaic channel, and the information about the mosaic channel is used by the terminal to obtain the mosaic channel bitstream.

In an implementation of this application, the video server may send the mosaic channel list to the terminal, and the mosaic channel list may include the information about the mosaic channel. The terminal may receive the corresponding mosaic channel bitstream based on the information about the mosaic channel, and play the mosaic channel bitstream.

A second aspect of this application provides a channel playing method, including:

A terminal receives a mosaic channel bitstream, obtains information about subchannels of a mosaic channel from the mosaic channel bitstream, and plays the mosaic channel bitstream. The information about the subchannels of the mosaic channel may be used by the terminal to obtain bitstreams of the subchannels when the terminal selects a subchannel of the mosaic channel to play.

In an implementation of this application, the terminal first receives the mosaic channel bitstream, obtains information about updated subchannels of the mosaic channel from the mosaic channel bitstream, and then the terminal plays the mosaic channel bitstream. The mosaic channel bitstream is obtained by a mosaic generator by obtaining a bitstream of each updated subchannel based on channel identifiers of the updated subchannels in a channel generation instruction after the mosaic generator receives the channel generation instruction sent by a video server, and combining the bitstreams of the subchannels. In addition, the channel identifiers of the subchannels included in the channel generation instruction are obtained by the video server by updating the subchannels of the mosaic channel based on channel identifiers in channel playing statistical information of the terminal. Therefore, the subchannels of the mosaic channel are obtained by updating based on the channel playing statistical information of the terminal, and the subchannels of the mosaic channel are related to the channel playing statistical information of the terminal, so that the mosaic channel can adapt to different terminals, to improve user experience.

Optionally, in some possible implementations, that the terminal obtains information about subchannels of a mosaic channel from the mosaic channel bitstream may include:

The terminal decodes the mosaic channel bitstream to obtain indication information carried in the mosaic channel bitstream. When the terminal determines, based on the indication information, that the subchannels of the mosaic channel corresponding to the mosaic channel bitstream are updated, the terminal obtains the information about the subchannels of the mosaic channel from the mosaic channel bitstream.

In an implementation of this application, the terminal decodes the mosaic channel bitstream, obtains the indication information in the mosaic channel bitstream, determines, based on the indication information, that the subchannels of the mosaic channel are updated, and may obtain, from the mosaic channel bitstream, the information about the updated subchannels of the mosaic channel. The information about the updated subchannels may be used by the terminal to obtain and play the bitstream of each subchannel.

Optionally, in some possible implementations, after the obtaining, by the terminal, information about subchannels of a mosaic channel from the mosaic channel bitstream, the method may further include:

The terminal obtains a selection instruction. The terminal selects a target subchannel from the subchannels of the mosaic channel based on the selection instruction. The terminal determines information about the target subchannel from the information about the subchannels of the mosaic channel. The terminal obtains a bitstream of the target subchannel based on the information about the target subchannel. The terminal decodes and plays the bitstream of the target subchannel.

In an implementation of this application, when a user selects one target subchannel of the mosaic channel to play, the terminal receives the selection instruction, determines the target subchannel from the subchannels of the mosaic channel based on the selection instruction, and then determines the information about the target subchannel based on the target subchannel based on the information about the updated subchannels of the mosaic channel. The information about the target subchannel may be a channel identifier, a bitstream address, or the like that are of the target subchannel, and the bitstream of the target subchannel is obtained based on the information about the target subchannel. The terminal may decode and play the bitstream of the target subchannel.

Optionally, in some possible implementations, the terminal stores indication data of the mosaic channel, and that the terminal obtains information about subchannels of a mosaic channel from the mosaic channel bitstream based on the indication information may include:

If the indication data is different from the indication information, the terminal updates the indication data to the indication information, and obtains the information about the subchannels of the mosaic channel from the mosaic channel bitstream.

In an implementation of this application, whether the subchannels of the mosaic channel are updated may be determined based on the indication data and the indication information. If the indication data is different from the indication information, the terminal may determine that the subchannels of the mosaic channel are updated. Then, the terminal may obtain the information about the subchannels of the mosaic channel from the mosaic channel bitstream and store the information.

Optionally, in some possible implementations, that the terminal obtains information about subchannels of a mosaic channel from the mosaic channel bitstream based on the indication information may include:

When the terminal determines that the subchannels of the mosaic channel indicated by the indication information are updated, the terminal obtains the information about the subchannels of the mosaic channel from the mosaic channel bitstream.

In an implementation of this application, it may be determined, according to a preset rule, that the subchannels of the mosaic channel indicated by the indication information are updated, and then the terminal may obtain the information about the subchannels of the mosaic channel from the mosaic channel bitstream and store the information. Specifically, the preset rule may be that, if a value included in the indication information is a preset value, it may be determined that the subchannels of the mosaic channel are updated.

Optionally, in some possible implementations, that the terminal obtains information about subchannels of a mosaic channel from the mosaic channel bitstream based on the indication information may include:

The terminal obtains the information about the subchannels of the mosaic channel from a program map table PMT of the mosaic channel bitstream.

In an implementation of this application, the updated information about the subchannels of the mosaic channel may be stored in the program map table (program map table, PMT), which is a specific manner of storing the information about the subchannels of the mosaic channel.

Optionally, in some possible implementations, that a terminal receives a mosaic channel bitstream may include:

The terminal obtains a mosaic channel list from a video server. The mosaic channel list includes information about the mosaic channel. The terminal receives the mosaic channel bitstream from the mosaic generator based on the information about the mosaic channel.

In this implementation of this application, the terminal may first receive the mosaic channel list sent by the video server, and the mosaic channel list includes information about one or more mosaic channels. "A plurality of' means two or more. The terminal may determine, based on the information about one or more mosaic channels included in the mosaic channel list, information about a to-be-played mosaic channel, and obtain a to-be-played mosaic channel bitstream for playing.

It should be noted that the mosaic channel in this application may be any mosaic channel in the mosaic channel list.

Optionally, in some possible implementations, the method may further include:

The terminal reports channel playing information to the video server, so that the video server obtains channel playing statistical information of the terminal. The channel playing statistical information includes a plurality of channel identifiers.

In this implementation of this application, the terminal may report the channel playing information to the video server, so that the video server collects statistics based on the channel playing information reported by the terminal, to obtain the channel playing statistical information of the terminal.

A third aspect of this application provides a channel playing method, including:

A mosaic generator receives a channel generation instruction, of a mosaic channel, sent by a video server. The channel generation instruction includes channel identifiers of updated subchannels. The mosaic generator generates a mosaic channel bitstream based on the channel generation instruction. The mosaic channel bitstream includes information about the updated subchannels, and the information about the updated subchannels includes the channel identifiers of the updated subchannels. The mosaic generator sends the mosaic channel bitstream to a terminal. The information about the subchannels may include the channel identifiers and other information related to the subchannels, for example, bitstream addresses, decoding manners, and encoding manners.

In an implementation of this application, the video server updates the subchannels of the mosaic channel by using the channel identifiers in the channel playing information of the terminal, and sends the channel generation instruction to the mosaic generator. After receiving the channel generation instruction, the mosaic generator generates the mosaic channel bitstream based on the updated subchannels of the mosaic channel and the channel identifiers of the updated subchannel. After receiving the mosaic channel bitstream, the terminal may play the mosaic channel bitstream. Therefore, the video server may update the subchannels of the mosaic channel based on the channel playing statistical information of the terminal, so that the subchannels of the mosaic channel are related to the channel playing statistical information of the terminal, and the mosaic channel can adapt to different terminals.

Optionally, in some possible implementations, the mosaic channel bitstream may further include indication information, and the indication information is used to indicate that the subchannels of the mosaic channel are updated.

In an implementation of this application, the mosaic channel bitstream may further include the indication information, and the indication information is used to indicate that the subchannels of the mosaic channel are updated. After receiving the mosaic channel bitstream and obtaining the indication information from the mosaic channel bitstream, the terminal may determine, based on the indication information, that the subchannels of the mosaic channel are updated, obtain the information about the updated subchannels of the mosaic channel from the mosaic channel bitstream, and store the information. Therefore, when playing one subchannel of the mosaic channel, the terminal may directly obtain, based on the information about the updated subchannels of the mosaic channel, a bitstream of a to-be-played subchannel, and play the bitstream.

Optionally, in some possible implementations, that the mosaic generator generates a mosaic channel bitstream based on the channel generation instruction may include:

The mosaic generator obtains bitstreams of the updated subchannels based on the channel identifiers of the updated subchannels. The mosaic generator combines the bitstreams of the updated subchannels to obtain the mosaic channel bitstream.

In this implementation of this application, the mosaic generator may obtain bitstreams of all subchannels based on the channel identifiers of the updated subchannels, and combine the bitstreams of all the subchannels to obtain the mosaic channel bitstream, which is a specific manner for combining mosaic channels.

Optionally, in some possible implementations, that the mosaic generator combines the bitstreams of the subchannels of the mosaic channel to obtain the mosaic channel bitstream may include:
combining current video data and audio data based on layout information of the updated subchannels to obtain the mosaic channel bitstream.

In an implementation of this application, the layout information of the updated subchannels may be determined by the video server, and the mosaic generator is notified of the layout information of the updated subchannels. The mosaic generator combines video data and audio data in the bitstreams of all the updated subchannels based on the layout information of the updated subchannels, to obtain the mosaic channel bitstream.

Optionally, in some possible implementations, the mosaic channel bitstream further includes a program map table PMT, and the PMT includes the information about the updated subchannels.

A fourth aspect of the embodiments of this application provides a video server, and the video server has a function of implementing the channel playing method in the first aspect. The function may be implemented by hardware, or may be implemented by hardware executing corresponding software. The hardware or the software includes one or more modules corresponding to the function.

A fifth aspect of the embodiments of this application provides a terminal, and the terminal has a function of implementing the channel playing method in the second aspect. The function may be implemented by hardware, or may be implemented by hardware executing corresponding software. The hardware or the software includes one or more modules corresponding to the function.

A sixth aspect of the embodiments of this application provides a mosaic generator, and the mosaic generator has a function of implementing the channel playing method in the third aspect. The function may be implemented by hardware, or may be implemented by hardware executing corresponding software. The hardware or the software includes one or more modules corresponding to the function.

A seventh aspect of the embodiments of this application provides a video server, and the video server may include:
a processor, a memory, a bus, and an input/output interface, where the processor, the memory, and the input/output interface are connected through the bus; the memory is configured to store program code; and when invoking the program code in the memory, the processor performs the steps performed by the video server provided in any one of the first aspect or the implementations of the first aspect of this application.

An eighth aspect of the embodiments of this application provides a terminal, and the terminal may include:
a processor, a memory, a bus, and an input/output interface, where the processor, the memory, and the input/output interface are connected through the bus; the memory is configured to store program code; and when invoking the program code in the memory, the processor performs the steps performed by the terminal provided in any one of the second aspect or the implementations of the second aspect of this application.

A ninth aspect of the embodiments of this application provides a mosaic generator, and the mosaic generator may include:
a processor, a memory, a bus, and an input/output interface, where the processor, the memory, and the input/output interface are connected through the bus; the memory is configured to store program code; and when invoking the program code in the memory, the processor performs the steps performed by the mosaic generator provided in any one of the third aspect or the implementations of the third aspect of this application.

A tenth aspect of the embodiments of this application provides a channel playing system. The channel playing system includes at least one video server, at least one terminal, and at least one mosaic generator. The at least one video server is a video server that performs any one of the first aspect or the implementations of the first aspect of this application; the at least one terminal is a terminal that performs any one of the second aspect or the implementations of the second aspect of this application; and the at least one mosaic generator is a mosaic generator that performs any one of the third aspect or the implementations of the third aspect in this application.

An eleventh aspect of the embodiments of this application provides a chip system. The chip system includes a processor, configured to support a video server, a terminal, or a mosaic generator in implementing functions in the foregoing aspects, for example, processing data and/or information in the foregoing methods. In a possible design, the chip system further includes a memory, and the memory is configured to store a program instruction and data that are necessary for a network device. The chip system may include a chip, or may include a chip and another discrete device.

The processor mentioned anywhere above may be a general-purpose central processing unit (CPU), a microprocessor, an application-specific integrated circuit (application-specific integrated circuit, ASIC), or one or more integrated circuits for controlling program execution of the data search method according to the first aspect.

A twelfth aspect of the embodiments of this application provides a storage medium. It should be noted that the technical solutions of this application essentially, or the part contributing to the prior art, or all or some of the technical solutions may be implemented in a form of a software product. The software product is stored in a storage medium, and is configured to store a computer software instruction used by the foregoing device. The computer software product includes a program designed for the video server, the terminal, or the mosaic generator to perform any one of the first aspect to the third aspect.

The storage medium includes various media that may store program code, such as a USB flash drive, a removable hard disk, a read-only memory (ROM for short, English full name: Read-Only Memory), a random access memory (RAM for short, English full name: Random Access Memory), a magnetic disk, or an optical disc.

A thirteenth aspect of the embodiments of this application provides a computer program product including an instruction. When the computer program product runs on a computer, the computer is enabled to perform the method according to any one of the optional implementations of the first aspect, the second aspect, or the third aspect of this application.

In this application, the video server may update the subchannels of the mosaic channel based on the channel identifiers in the channel playing statistical information in the terminal, and notify the mosaic generator to generate the mosaic channel bitstream, so that the terminal can play the mosaic channel bitstream. Therefore, in the implementations of this application, the subchannels of the mosaic channel may be updated in real time based on the channel playing statistical information of the terminal. In this way, the subchannels of the mosaic channel are associated with the channel playing information of the terminal, and the mosaic channel adapts to different terminals, to improve user experience. Therefore, in this application, the subchannels of the mosaic channel may be adjusted based on different terminals. Each terminal may correspond to one mosaic channel bitstream, to obtain mosaic channel bitstreams that are adapted to different terminals. In this way, the terminal can play an adapted mosaic channel, to improve user experience.

### BRIEF DESCRIPTION OF DRAWINGS

FIG. 1 is a system framework diagram of a channel playing method according to this application;
FIG. 2 is a schematic diagram of an embodiment of a channel playing method according to this application;
FIG. 3A and FIG. 3B are schematic diagrams of another embodiment of a channel playing method according to this application;
FIG. 4 is a schematic diagram of an embodiment of a video server according to this application;
FIG. 5 is a schematic diagram of an embodiment of a mosaic generator according to this application;
FIG. 6 is a schematic diagram of an embodiment of a terminal according to this application;
FIG. 7 is a schematic diagram of another embodiment of a video server according to this application;
FIG. 8 is a schematic diagram of another embodiment of a mosaic generator according to this application;
FIG. 9 is a schematic diagram of another embodiment of a terminal according to this application; and
FIG. 10 is a schematic diagram of another embodiment of a terminal according to this application.

### DESCRIPTION OF EMBODIMENTS

This application provides a channel playing method and a related device, to collect statistics on channel playing information of a terminal, and update a mosaic channel bitstream and a played image based on a statistical result. In this way, subchannels of a mosaic channel are updated based on the playing information of the terminal, and the terminal device plays an adapted mosaic channel, to improve user experience.

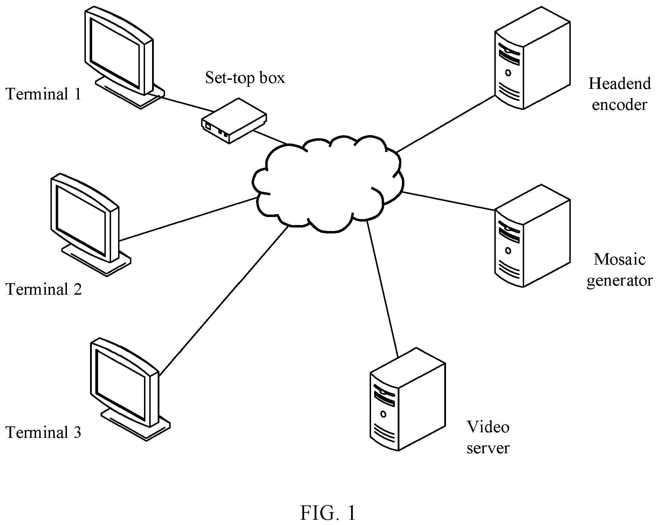

First, a system framework of a channel playing method in this application may be shown in FIG. 1, and may include one or more terminals (for example, a terminal 1, a terminal 2, and a terminal 3 in FIG. 1), a set-top box, a video server, a mosaic generator, a headend encoder, and the like.

The terminal, the set-top box, the video server, the mosaic generator, and the headend encoder may be connected through a wireless or wired network. In addition, a content delivery network (Content Delivery Network, CDN) may be constructed based on the wireless or wired network, to improve a transmission rate between the terminal, the video server, the mosaic generator and headend encoder. Specifically, if the CDN is constructed based on the wireless or wired network, the system architecture may further include devices such as a CDN node and a CDN controller. The devices such as the CDN node and the CDN controller may be disposed in a distributed manner, or may be controlled in a cluster manner, and may be specifically adjusted based on actual application, the CDN is not limited herein. In addition, the terminal may directly access a network and communicate with the video server, the mosaic generator, and the like, or may access the network through the set-top box and communicate with the video server, the mosaic generator, and the like. The terminal may directly decode a bitstream of a channel, or the set-top box may decode the bitstream of the channel and then transmit the bitstream to the terminal. This may be specifically adjusted based on an actual scenario, and is not limited herein.

Specifically, the video server is configured to initiate creation of a mosaic channel, configure information about the mosaic channel, determine subchannels of the mosaic channel, and notify the mosaic generator to create the mosaic channel. The video server may be a server disposed in a distributed or cluster manner, and usually may be a video platform managed by an operator.

The mosaic generator is configured to configure an encoding template. After determining the subchannels of the mosaic channel, the video server pulls bitstreams of the subchannels, and combines the bitstreams of the subchannels into a mosaic channel bitstream.

The headend encoder is used to generate or receive the bitstreams of the subchannels and provide the bitstreams of the subchannels or the mosaic channel bitstream for the mosaic generator, the terminal, or the video server.

The terminal can play a played image of the mosaic channel and select a subchannel corresponding to a small window of the mosaic channel to play. There may be one or more terminals, or there may be two or more terminals.

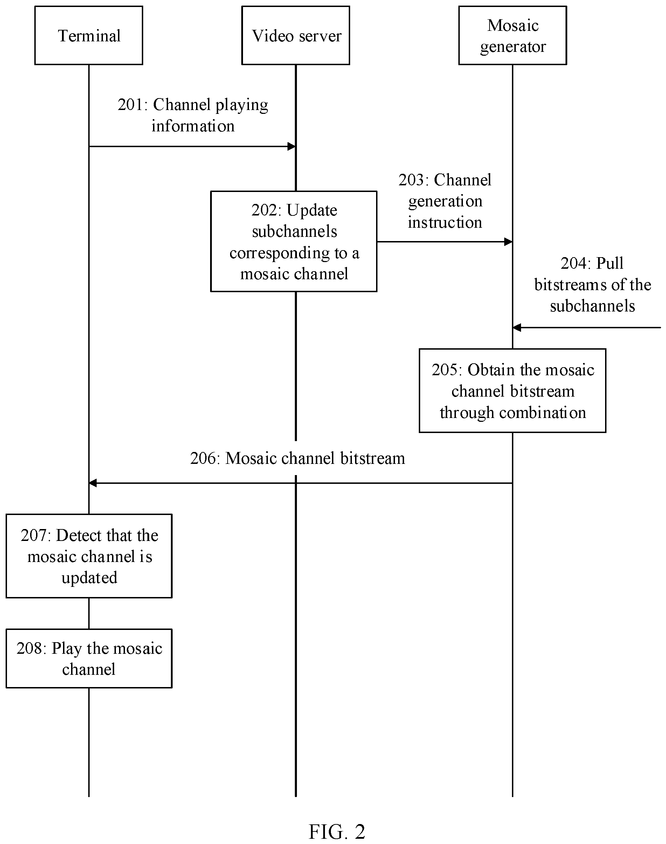

It should be understood that there may be a plurality of mosaic channels, and the mosaic channel in this application may be any mosaic channel. The following uses one of the mosaic channels and the terminal as an example to describe the channel playing method provided in this application. A specific procedure of the channel playing method provided in this application is shown in FIG. 2, and may include the following steps.

201: A video server collects statistics on channel playing information of a terminal.

First, after a mosaic channel is created, the video server may periodically collect the channel playing information of the terminal, or another device may collect the channel playing information of the terminal and periodically send the channel playing information to the video server, or the terminal may report the channel playing information, and the video server collects statistics on the channel playing information of the terminal, to obtain channel playing statistical information. The channel playing statistical information includes one or more channel identifiers. "A plurality of' in this application means two or more.

The channel playing statistical information is statistical information about channels played on the terminal, for example, a channel list played on the terminal in the last hour and playing duration of each channel played on the terminal in the last hour. The channel playing statistical information may include ranking information about channels played on the terminal. The ranking information about the channels may be a ranking of frequencies of the channels played on the terminal, a ranking of duration of the channels played on the terminal, or the like.

Specifically, after obtaining the channel playing statistical information of the terminal, the video server may determine a channel played on the terminal, for example, a channel that is played most frequently on the terminal, a channel that is played for the longest time on the terminal, or a channel that is always played in a time period on the terminal, and the channel playing statistical information is used to update subchannels of the mosaic channel.

It should be noted that the terminal in this application may be a set-top box, a television (television, TV), a tablet computer, a mobile phone, another device that has a decoding function and/or a playing function, and the like.

The collected channel playing statistical information of the terminal may be used to update the subchannels of the mosaic channel, so that the subchannels of the mosaic channel may be adjusted based on the channel playing statistical information of the terminal. For example, when a user uses the terminal, the mosaic channel obtained by the terminal is related to a playing record of the terminal. In this case, the user can find a channel related to historical playing from the mosaic channel, to improve user experience.

202: The video server updates the subchannels corresponding to the mosaic channel.

After obtaining the channel playing statistical information of the terminal, the video server determines the subchannels of the mosaic channel based on the one or more channel identifiers included in the channel playing statistical information, and updates the subchannels of the mosaic channel. Specifically, the subchannels of the mosaic channel may be determined based on the channel playing statistical information of the terminal. For example, channels whose play frequencies are greater than a frequency threshold or whose play duration is greater than duration threshold within one hour may be used as current subchannels of the mosaic channel. "A plurality of" in this application means two or more.

Specifically, alternatively, after collecting statistics on the channel playing information of the terminal, the video server stores the channel identifiers obtained through statistics collection in the channel playing statistical information, and then the video server directly updates the subchannels of the mosaic channel based on the channel identifiers in the channel playing statistical information.

In addition, the video server may further set arrangement of display of the subchannels of the mosaic channel, for example, set a layout of images of the subchannels, including setting an arrangement order of the subchannels based on a preset order, and setting small windows of the current subchannels based on a preset size. For another example, the video server may set a subchannel that is frequently played on the terminal in an upper left corner or in a middle of a window of the mosaic channel, so that when the user plays a mosaic channel bitstream through the terminal, the subchannel that is frequently played can be intuitively found, to improve user experience.

Specifically, the video server may update the subchannels of the mosaic channel based on playing popularity of the channels. The video server first sorts the popularity of the channels played on the terminal, which may be understood as that a channel with longer play duration has higher popularity, a channel with a higher play frequency has higher popularity, or a channel with a higher recent play frequency has higher popularity. Specifically, a manner of arranging the popularity of the channels may be adjusted based on an actual application scenario, and is not limited herein.

Therefore, the video server may update the subchannels of the mosaic channel based on the channel playing statistical information of the terminal, so that the subchannels of the mosaic channel are related to the channel playing statistical information of the terminal. For example, the video server may arrange the subchannels in the mosaic channel based on an order in which the subchannels are popularly played on the terminal, and update the subchannels of the mosaic channel. In this way, when playing the mosaic channel, the terminal may directly select a subchannel with a relatively high playing frequency, to improve user experience.

203: The video server sends a channel generation instruction to the mosaic generator.

After updating the subchannels of the mosaic channel, the video server sends the channel generation instruction to the mosaic generator. The channel generation instruction may specifically include the subchannels of the mosaic channel, the channel identifiers of the subchannels, input stream information or output stream information of each subchannel, and the like, and is used to instruct the mosaic generator to generate a mosaic channel bitstream that includes the updated subchannels and channel identifiers of the updated subchannels.

When receiving the channel generation instruction, the mosaic generator may determine that the subchannels of the mosaic channel are updated, and obtain the updated subchannels of the mosaic channel, the channel identifiers of the updated subchannels, or information such as the input stream information or the output stream information of each subchannel from the channel generation instruction.

More specifically, the video server may send the channel generation instruction to the mosaic generator through a wireless or wired network or the like. The channel generation instruction carries information about the updated subchannels of the mosaic channel, for example, a bitstream address, a decoding manner, an encoding manner, and an audio track or a subtitle of the subchannels.

204: The mosaic generator pulls bitstreams of the subchannels.

After receiving the channel generation instruction sent by the video server, the mosaic generator may determine, from the channel generation instruction, the subchannels corresponding to the mosaic channel and related information of each subchannel, for example, a channel identifier, input stream information, and output stream information.

The mosaic generator obtains the bitstreams of the subchannels based on the information that is sent by the video server and that is about the subchannels. Specifically, each subchannel corresponds to at least one bitstream, and the bitstream of each subchannel includes video data, audio data, subtitle data, a channel identifier, and the like of the corresponding subchannel. The mosaic generator may obtain the bitstreams of the subchannels based on addresses of the bitstreams included in the input stream information or the output stream information of the bitstreams.

205: The mosaic generator obtains the mosaic channel bitstream through combination.

After obtaining the bitstream of each subchannel, the mosaic generator combines the bitstreams of one or more subchannels of the mosaic channel to generate the mosaic channel bitstream.

Specifically, that the mosaic generator obtains the bitstreams of all subchannels and combines the bitstreams may be as follows: First, the mosaic generator decodes based on a video encoding format of each bitstream, to obtain the video data, the audio data, the subtitle data, or the like of each subchannel. Then, the mosaic generator performs video data fusion on the video data based on coordinate positions of the subchannels in the mosaic channel, to obtain video data of the mosaic channel. The coordinate positions of the subchannels in the mosaic channel are obtained based on layout information determined by the video server. Audio data of each subchannel may also be configured, and coordinates of each subchannel in the mosaic channel correspond to the audio data of the subchannel. For example, after the terminal decodes the mosaic channel bitstream, if a selection cursor of the terminal stays on one of the small windows, audio data played on the terminal in this case is audio data of a subchannel in the small window. In other words, the terminal plays audio of the subchannel in the small window. In addition, the mosaic generator may further arrange an identifier of the mosaic channel, an identifier of each subchannel, and the like, and combine the identifier of the mosaic channel, the identifier of each subchannel, and the video data, the audio data, and the like that are of the mosaic channel, to obtain the mosaic channel bitstream.

Usually, the mosaic channel bitstream includes a plurality of unit data blocks. Combining the bitstreams of the subchannels of the mosaic channel may also be understood as combining data blocks in the bitstream of each subchannel at a same moment.

Therefore, after the video server updates the subchannels of the mosaic channel based on channel playing of the terminal, the mosaic generator combines the bitstreams of the subchannels of the mosaic channel to obtain the mosaic channel bitstream. Therefore, the subchannels of the mosaic channel may be updated based on the channel playing statistical information of the terminal, and image content is synchronized with channel information, to improve user experience.

206: The terminal obtains the mosaic channel bitstream from the mosaic generator.

The terminal may obtain the mosaic channel bitstream from the mosaic generator. Specifically, the terminal may pull the mosaic channel bitstream through an ingress device of a CDN. The ingress device of the CDN may include a device such as a CDN node or a CDN controller.

It should be noted that, the mosaic channel bitstream is obtained by the terminal based on information of the mosaic channel included in a mosaic channel list obtained by the video server, and may be obtained before the terminal reports the channel playing information, or after the terminal reports the channel playing information. When the terminal accesses the mosaic channel, the terminal can continuously obtain the mosaic channel bitstream.

207: The terminal detects that the mosaic channel is updated.

After obtaining the mosaic channel bitstream, the terminal decodes the mosaic channel bitstream. After determining, based on the mosaic channel bitstream, that the mosaic channel is updated, the terminal obtains the information about the subchannels of the mosaic channel from the mosaic channel bitstream. The information about the subchannels of the mosaic channel is used by the terminal to obtain, based on the information about the subchannels of the mosaic channel, a bitstream of a to-be-played subchannel when the terminal plays the subchannels through the mosaic channel, and play the bitstream.

The information about the subchannels of the mosaic channel may be, for example, a channel identifier and a bitstream address of each subchannel of the mosaic channel. After the terminal detects that the subchannels of the mosaic channel are updated, the terminal may update information about the subchannels of the mosaic channel stored on the terminal based on the information about the subchannels included in the mosaic channel bitstream. If the terminal detects that the subchannels of the mosaic channel are not updated, the terminal may update the information about the subchannels stored on the terminal, or may not update the information. This may be specifically adjusted based on an actual application scenario, and is not limited herein.

208: The terminal plays the mosaic channel.

After receiving the mosaic channel bitstream, the terminal decodes the mosaic channel bitstream and plays the mosaic channel based on a decoding result. In this way, a mosaic channel image on the terminal is updated in real time, and the mosaic channel image is synchronized with the channel information.

More specifically, when the terminal plays the mosaic channel, a played image may include a plurality of small windows, and each small window corresponds to one subchannel. When the terminal stays on or selects a subchannel, audio played on the terminal is audio of the subchannel.

The terminal may select a to-be-played subchannel, and after determining the to-be-played subchannel, the terminal may obtain a bitstream of the subchannel based on information about the subchannel, decode the bitstream of the subchannel, and then play the subchannel based on a decoding result. The information about the subchannels may be information about the subchannels stored on the terminal when the terminal device determines that the subchannels of the mosaic channel are not updated, or may be information about the subchannels parsed from the mosaic channel bitstream after the terminal determines that the subchannels of the mosaic channel are updated, which may be adjusted based on an actual application scenario.

In this application, the video server may monitor a channel played on the terminal, periodically collect the playing information of the terminal, update the subchannels of the mosaic channel based on the playing information of the terminal, and combine the bitstreams of the subchannels corresponding to the mosaic channel to obtain the mosaic channel bitstream. The terminal may obtain the updated mosaic channel bitstream and play a mosaic channel corresponding to the playing information of the terminal. Therefore, mosaic channel bitstreams that adapt to different terminals can be obtained, so that the terminal can play an adapted mosaic channel, to improve user experience.

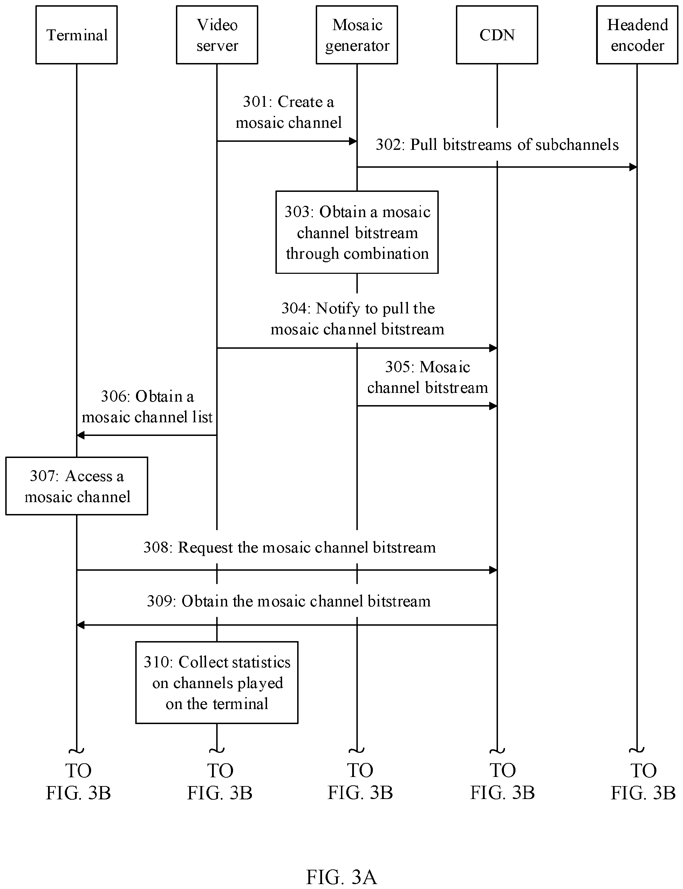

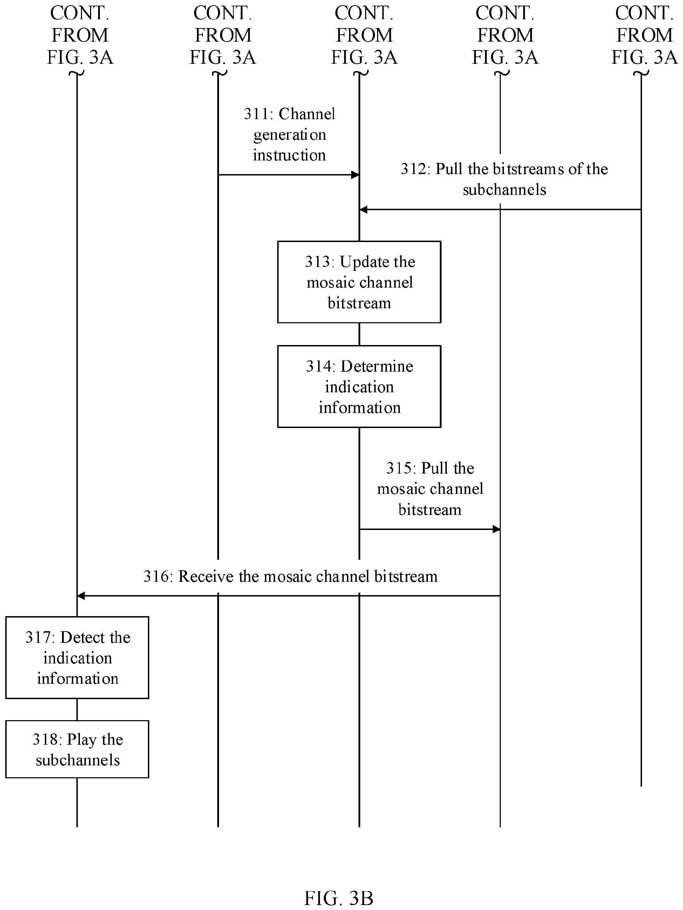

The foregoing describes a procedure of updating the mosaic channel bitstream in this application. The following further describes a channel playing method in this application with reference to the process of creating the mosaic channel. Referring to FIG. 3A and FIG. 3B, a specific procedure of a channel playing method in this application may include the following steps.

301: A video server initiates creation of a mosaic channel.

Before playing the mosaic channel, the mosaic channel needs to be created. Specifically, the video server needs to initiate a mosaic channel creation request to a mosaic generator.

The video server configures the mosaic channel, including layout information of small windows of the mosaic channel, input stream information, and output stream information, audio track and subtitle information, and channel identifiers that are of subchannels of the mosaic channel.

Then, the video server sends the configured mosaic channel to the mosaic generator by using the mosaic channel creation request.

The mosaic generator includes an encoding template. Therefore, the encoding template needs to be configured on the mosaic generator. The encoding template may be configured by a video platform, or may be configured by a user through the mosaic generator, or may be configured by the mosaic generator based on channel information determined by the video server, or the like. The encoding template includes information about a mosaic channel bitstream, and the mosaic channel bitstream may be combined by using content and a format that are included in the encoding template, which may be understood as combining the mosaic channel bitstream by using the encoding template as a preset format.

302: The mosaic generator pulls bitstreams of the subchannels from a headend encoder.

The mosaic generator determines the subchannels of the mosaic channel, and input stream information and output stream information that are of each subchannel based on the information that is about the mosaic channel and that is sent by the video server. The mosaic generator pulls a bitstream of each subchannel based on information that is about the subchannels and that is provided by the video server.

It may be understood that the video server sends the information about the mosaic channel to the mosaic generator. The information includes a bitstream address, a channel identifier, coordinate information, and the like that are of each subchannel in the mosaic channel. The mosaic generator may pull the bitstream of each subchannel from the headend encoder based on the bitstream address, the channel identifier, and the like that are of each subchannel.

Still further, after receiving a channel generation instruction sent by the video server, the mosaic generator obtains channel identifiers of updated subchannels of the mosaic channel based on the channel generation instruction. The mosaic generator may send the channel identifiers of the current subchannels to the headend encoder, to request to pull the bitstreams of the subchannels of the mosaic channel. The headend encoder identifies the current subchannels based on the channel identifiers of the current subchannel, and sends bitstreams of the current subchannels to the mosaic generator.

The headend encoder may be a harmonic (harmonicinc) encoder, a network encoder, or the like, and may be configured to perform encoding, compression, or the like on video data, audio data, or the like according to a preset protocol or format, to convert analog data into digital data that can be read by a machine. The headend encoder may directly encode data of each subchannel to obtain a bitstream of each subchannel, or may directly receive a bitstream of each subchannel from a network device of each subchannel, and then forward the bitstream to the mosaic generator or the like. This may be specifically adjusted based on an actual application scenario, and is not limited herein.

303: The mosaic generator obtains the mosaic channel bitstream through combination.

After obtaining the bitstream of each subchannel, the mosaic generator decodes the bitstream of each subchannel to obtain video information, audio information, subtitle information, and the like that are of each subchannel. The mosaic generator obtains configuration information that is about the mosaic channel and that is configured by the video server, for example, the layout information of the small windows, the audio track information, and the subtitle information.

Then, the mosaic generator combines the bitstreams of all subchannels. Specifically, the mosaic generator may extract video data in the bitstream of each subchannel, separately correspond each piece of video data to coordinates based on coordinate information of each small window configured by the video server, and combine the video data of each subchannel to obtain video data of the mosaic channel. Each subchannel corresponds to a small window of an image of the mosaic channel, and each small window corresponds to the audio data of each subchannel, and may further include subtitle data preset for the mosaic channel. The mosaic generator combines the video data, the audio data, and the subtitle data into the mosaic channel bitstream.

304: The video server indicates a CDN to pull the mosaic channel bitstream.

After the mosaic generator completes combination of the mosaic channel bitstream, the video server may send the information about the mosaic channel to an ingress device of the CDN by using the channel generation instruction. The channel generation instruction may include an identifier of the mosaic channel, a bitstream address corresponding to the mosaic channel bitstream, and the like.

The ingress device of the CDN may be a device such as a CDN node or a CDN controller in the CDN network, and may be configured to obtain the mosaic channel bitstream and forward the mosaic channel bitstream.

305: The CDN pulls the mosaic channel bitstream.

After receiving notification information sent by the video server, the CDN obtains the identifier of the mosaic channel, the corresponding bitstream address, and the like from the notification information, and obtains the mosaic channel bitstream by using the identifier of the mosaic channel, the corresponding bitstream address, and the like. After obtaining the mosaic channel bitstream, the CDN may send the mosaic channel bitstream to a terminal, or may send the mosaic channel bitstream to the video server. In this way, the terminal can play the mosaic channel based on the mosaic channel bitstream.

In this implementation of this application, the step 304 and the step 305 are optional steps.

306: The terminal obtains a mosaic channel list from the video server.

The terminal first obtains the mosaic channel list from the video server. The mosaic channel list includes identifiers of a plurality of mosaic channels, and each mosaic channel includes a plurality of subchannels. The mosaic channel list may further include an identifier of each mosaic channel.

Specifically, the mosaic channels included in the mosaic channel list may correspond to different subchannels. For example, subchannels of one mosaic channel are trendy drama channels, and channels of the other mosaic channel are satellite channels.

307: The terminal accesses the mosaic channel.

The terminal accesses the mosaic channel. To be specific, the terminal can select a mosaic channel from the mosaic channel list and play the mosaic channel bitstream.

308: The terminal requests the mosaic channel bitstream from the CDN.

After selecting a to-be-played mosaic channel, the terminal sends a request message to the CDN, to request to obtain a selected mosaic channel bitstream. The request message may carry a channel identifier of the mosaic channel selected by the terminal from the mosaic list, so that the CDN can identify the selected mosaic channel, and identifies the mosaic channel bitstream based on the channel identifier of the mosaic channel.

The terminal may send the request message to the ingress device in the CDN, to request a network node in the CDN to obtain the mosaic channel bitstream from the mosaic generator, and forward the mosaic channel bitstream to the terminal.

Specifically, the terminal may carry the identifier of the mosaic channel, the bitstream address of the mosaic channel, or the like in the request message. After receiving the identifier of the mosaic channel, the bitstream address of the mosaic channel, or the like, the CDN may send the identifier of the mosaic channel, the bitstream address of the mosaic channel, or the like to the mosaic generator, and the mosaic generator identifies the corresponding mosaic channel and sends the corresponding mosaic channel bitstream to the CDN.

309: The terminal obtains the mosaic channel bitstream.

After obtaining the mosaic channel bitstream from the mosaic generator, the CDN forwards the mosaic channel bitstream to the terminal, so that the terminal decodes the mosaic channel bitstream and plays the mosaic channel bitstream.

Specifically, when the terminal plays the mosaic channel, a played image of the mosaic channel includes a plurality of small windows, and each small window corresponds to an image of a subchannel. It may also be understood that each small window separately plays an image of a corresponding subchannel. When the terminal stays on one of the small windows, audio corresponding to the mosaic channel is audio of a subchannel corresponding to the small window. For example, when the terminal plays the mosaic channel, focus may stay on one of the small windows. In this case, audio played on the terminal is audio of a subchannel corresponding to the small window.

310: The video server collects statistics on channels played on the terminal.

The video server may periodically collect statistics on channel playing information of the terminal, or the terminal actively reports the channel playing information, or another network device collects statistics on the channel playing information of the terminal and sends the channel playing information to the video server, so that the video server collects statistics on the channel playing information of the terminal to obtain channel playing statistical information of the terminal. Specifically, the channel playing statistical information of the terminal may include channels played on the terminal in preset duration, duration of the played channels, channels whose switching frequencies are greater than a threshold, and the like.

The video server may update the subchannels of the mosaic channel based on the channel playing statistical information of the terminal. For example, if the terminal may arrange, based on playing duration, the channels played on the terminal in the preset duration, the subchannels of the mosaic channel are updated to channels whose play duration exceeds a duration threshold. If the terminal arranges the channels based on playing frequencies, the subchannels of the mosaic channel are updated to the channels whose playing frequencies exceed the threshold. Therefore, the subchannels of the mosaic channel can be updated based on a playing record of the terminal, so that the subchannels of the mosaic channel are more adaptable to the terminal. It can be understood that an adapted mosaic channel is customized for the terminal based on the playing record of the terminal, so that when a user uses the terminal to play the mosaic channel, the subchannels of the mosaic channel better adapt to video playing of the terminal, to improve user experience.

311: The video server sends the channel generation instruction to the mosaic generator.

The video server determines the subchannels of the mosaic channel based on the channel playing statistical information. The channels whose playing duration is greater than the duration threshold, channels whose playing frequencies are greater than a frequency threshold, or channels that are recently played on the terminal may be used as the subchannels of the mosaic channel, and the subchannels of the mosaic channel are updated.

After updating the subchannels of the mosaic channel, the video server may send the channel generation instruction to the mosaic generator, to notify the mosaic generator of the updated subchannels of the mosaic channel and channel identifiers of the subchannels, so that the mosaic generator updates the mosaic channel bitstream based on the updated subchannels of the mosaic channel.

Specifically, the channel generation instruction may include information about the updated subchannels of the mosaic channel, including a channel identifier, input stream information, output stream information, and the like that are of each subchannel, so that the mosaic generator can obtain the information about the subchannels of the mosaic channel based on the channel generation instruction.

In an optional implementation, in addition to that the video server may determine the subchannels of the mosaic channel based on the channel identifiers in the channel playing statistical information of the terminal, the video server may alternatively obtain recommended channel information for the terminal based on big data analysis, and determine the subchannels of the mosaic channel based on the recommended channel information. For example, channels with relatively high click-through rates may be recommended to the terminal as the subchannels of the mosaic channel based on a current channel playing click-through rate ranking on an internet.

312: The mosaic generator pulls the bitstreams of the subchannels from the headend encoder.

The channel generation instruction sent by the video server to the mosaic generator may include the information about the updated subchannels of the mosaic channel, including the channel identifier, the input stream information, the output stream information, and the like that are of each subchannel. The mosaic generator may accurately obtain a bitstream of each updated subchannel of the mosaic channel from the headend encoder based on the information that is about the updated subchannels of the mosaic channel and that is included in the channel generation instruction.

Specifically, that the mosaic generator pulls the bitstreams of the subchannels from the headend encoder is similar to that the mosaic generator pulls the bitstreams of the subchannels in the step 302. Details are not described herein again.

313: The mosaic generator updates the mosaic channel bitstream.

The mosaic generator updates the mosaic channel bitstream after pulling the bitstreams of the updated subchannels of the mosaic channel. The mosaic generator updates the mosaic channel bitstream based on the subchannels, of the mosaic channel, updated by the video server and an arrangement manner of the subchannels. The mosaic generator re-extracts the audio data, the video data, the subtitle data, and the like corresponding to the bitstream of each subchannel, and re-combine the video data, the audio data, and the like that are of the mosaic channel to obtain an updated mosaic channel bitstream.

It should be understood that the specific manner in which the mosaic generator updates the mosaic channel bitstream in the step 313 may be the same as the specific manner in which the mosaic generator combines the mosaic channel bitstream in the step 303. Details are not described herein again.

314: The mosaic generator determines indication information.

The indication information may be used to identify whether the subchannels of the mosaic channel are updated. After updating the mosaic channel bitstream, the mosaic generator updates the indication information, so that the terminal can determine, based on the indication information, whether the mosaic channel bitstream is updated.

The indication information may be generated by the video server or the mosaic generator when the mosaic channel is created, or may be generated or updated by the mosaic generator after the mosaic generator determines that the subchannels of the mosaic channel are updated. This is not limited herein.

In an optional implementation, the indication information may be a version identifier of the mosaic channel, a preset subchannel change identifier, or the like.

In an optional implementation, a format of the mosaic channel bitstream may correspond to a transport stream (transport stream, TS) protocol, and the mosaic generator may obtain the mosaic channel bitstream through combination according to the TS protocol. The mosaic channel bitstream may further include a program map table (program map table, PMT) combined by the mosaic generator, and the PMT may include information about each subchannel corresponding to the mosaic channel, including the channel identifier, the input stream information, the output stream information, and the like. The information about the subchannels included in the PMT may be rewritten by the mosaic generator after the mosaic generator receives the information that is about the subchannels of the mosaic channel and that is sent by the video server, and then the mosaic generator sends the information about the subchannels to the terminal through the mosaic channel bitstream.

In an optional implementation, the indication information may also be included in the PMT. For example, the indication information is a version identifier version_number. After determining that the subchannels of the mosaic channel are updated, the mosaic generator updates the version_number and stores the version_number in the PMT.

In an optional implementation, the mosaic generator may further extend a descriptor in a descriptor (descriptor) in the PMT. The descriptor includes the information about the updated subchannels of the mosaic channel. For example, the descriptor may include the channel identifiers of the subchannels, and an updated version number of the information about the subchannels. After the mosaic channel bitstream is updated, in addition to determining the indication information, the mosaic generator may further synchronize update information of the mosaic channel to the descriptor of the PMT, so that after parsing that the indication information is updated, the terminal can further obtain the information about the subchannels of the mosaic channel.

Therefore, in this application, the mosaic generator determines the indication information, so that the terminal determines that the subchannels of the mosaic channel are updated, and obtains the information about the updated subchannels of the mosaic channel, to avoid that the terminal centrally obtains the information about the mosaic channel from the video server, improve efficiency of obtaining the information about the subchannels of the mosaic channel by the terminal, and reduce a workload of the video server.

315: The CDN pulls the mosaic channel bitstream.

When the terminal plays the mosaic channel, the CDN can continuously pull the mosaic channel bitstream from the mosaic generator and continuously send the mosaic channel bitstream to the terminal. The step 315 is similar to the step 305. Details are not described herein again.

316: The terminal receives the mosaic channel bitstream.

The process of obtaining the mosaic channel bitstream by the terminal in the step 316 is similar to the process of obtaining the mosaic channel bitstream by the terminal in the step 309. Details are not described herein again.

317: The terminal monitors the indication information.

Before playing the mosaic channel, the terminal may periodically detect whether the indication information is updated. If the indication information is updated, the terminal may determine that the subchannels of the mosaic channel are updated.

A specific manner in which the terminal determines, based on the indication information, whether the subchannels of the mosaic channel are updated may include a plurality of manners. The following three manners are used as examples. 1. The mosaic generator periodically sends the indication information to the terminal through the mosaic channel bitstream, and the terminal stores indication data. When detecting that the stored indication data is different from the indication information in the mosaic channel bitstream, the terminal determines that the subchannels of the mosaic channel are updated, updates the indication data to the indication information, parses the mosaic channel bitstream to obtain the information about the updated subchannels of the mosaic channel, and stores the information about the updated subchannels of the mosaic channel to the terminal. 2. After determining that the subchannels of the mosaic channel are updated, the mosaic generator updates the indication information to a preset value based on a preset mapping relationship. For example, if the mosaic generator determines that the subchannels of the mosaic channel are updated, the mosaic generator updates a value of the indication information to 1, and then sends the indication information to the terminal. After detecting that the value of the indication information is 1, the terminal determines, based on the preset mapping relationship, that the subchannels of the mosaic channel are updated, parses the information about the updated subchannels of the mosaic channel from the mosaic channel bitstream, and stores the information about the updated subchannels of the mosaic channel to the terminal. 3. The mosaic generator may send the indication information to the terminal through the mosaic channel bitstream only after determining that the subchannels of the mosaic channel are updated. When detecting that the mosaic channel bitstream includes the indication information, the terminal may determine that the subchannels of the mosaic channel are updated, and the terminal parses the mosaic channel bitstream to obtain the information about the updated subchannels of the mosaic channel and stores the information about the updated subchannels of the mosaic channel to the terminal. In addition, in addition to the foregoing manner in which the terminal determines, based on the indication information, whether the subchannels of the mosaic channel are updated, another determining manner may be further included, and may be specifically adjusted according to an actual application scenario. This is not limited herein.

In an optional implementation, after determining, based on the indication information, that the subchannels of the mosaic channel are updated, the terminal may read the extended descriptor in the PMT. The descriptor may carry the information about the updated subchannels of the mosaic channel, for example, the channel identifiers, channel titles, and channel version numbers of the updated subchannels of the mosaic channel. The terminal may directly obtain the information about the subchannels from the extended descriptor in the PMT, and does not need to request the information about the subchannels of the mosaic channel from the video server, to improve playing efficiency of the terminal. Usually, a plurality of terminals are connected to the video server, the video server customizes a mosaic channel based on channel playing statistical information of each terminal. If each terminal obtains the information about the updated subchannels of the mosaic channel from the video server, the workload of the video server is increased. Therefore, after determining that the indication information is updated, the terminal in this application continues to obtain the extended descriptor in the PMT table included in a mosaic channel bitstream summary, and may obtain the information about the updated mosaic channel from the extended descriptor in the PMT table, to avoid that the terminal centrally obtains the information about the updated subchannels of the mosaic channel from the video server, and reduce the workload of sending the information about the updated subchannels of the mosaic channel by the video server to the terminal.

318: The terminal plays the subchannels.

If the terminal determines, based on the indication information, that the subchannels of the mosaic channel are not updated, and the terminal stores the information about the subchannels of the mosaic channel, the terminal may continue to decode and play the mosaic channel bitstream based on the stored information. If the terminal determines, based on the indication information, that the subchannels of the mosaic channel are updated, the terminal may obtain the information about the updated subchannels of the mosaic channel from the mosaic channel bitstream, and play the mosaic channel based on the information about the updated subchannels of the mosaic channel. For example, the played image of the mosaic channel includes a plurality of small window images, and each small window image corresponds to one subchannel. The user may select any subchannel to play. After the user selects one of the subchannels, the terminal receives a selection instruction, determines a to-be-played target subchannel based on the selection instruction, and determines, based on the information that is about the subchannels and that is stored on the terminal device or the information that is about the subchannels and that is obtained from the mosaic channel bitstream, information such as the channel identifiers, the channel version numbers, and the like that correspond to the subchannels, obtains the bitstreams of the subchannels from the CDN or the headend encoder based on the information about the subchannels, decodes the bitstreams of the subchannels, and plays the bitstreams of the subchannels.

In this implementation of this application, the video server collects statistics on the channel playing information of the terminal in real time, to obtain channel playing statistical information of the terminal, and updates the subchannels of the mosaic channel and the mosaic channel bitstream in real time based on the channel playing statistical information of the terminal. The subchannels of the mosaic channel are updated based on the channel playing statistical information of the terminal, so that the subchannels of the mosaic channel correspond to the channel playing statistical information of the terminal, to improve user experience. In addition, image update of the mosaic channel is synchronized with update of the information about the subchannels, so that the terminal can update the image of the mosaic channel in real time. In addition, by using an extended descriptor in the PMT table to carry the update of the subchannels of the mosaic channel, the terminal may directly determine, based on the indication information, whether the mosaic channel is updated, and pull the mosaic channel bitstream from the CDN by using the extended descriptor in the PMT table, to avoid that the terminal centrally update the information about the subchannels from the video server, and avoid impact on working efficiency of the video server when the video server centrally updates the information about the subchannels on the terminal.

The foregoing describes a specific procedure of the channel playing method provided in this application. The following describes apparatuses provided in this application. The apparatus provided in this application includes a video server, a mosaic generator, and a terminal. The following separately describes the apparatuses.

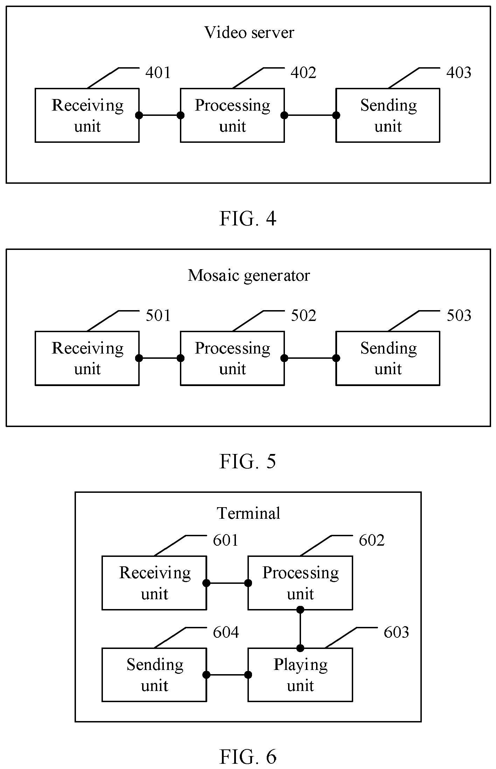

FIG. 4 is a schematic diagram of an embodiment of a video server according to this application. The video server may include:
a receiving unit 401, configured to obtain channel playing statistical information of a terminal, where the channel playing statistical information includes a plurality of channel identifiers;
a processing unit 402, configured to update subchannels of a mosaic channel based on the channel identifiers in the channel playing statistical information; and
a sending unit 403, configured to send a channel generation instruction to a mosaic generator, where the channel generation instruction is used to instruct the mosaic generator to generate a mosaic channel bitstream that includes the updated subchannels and channel identifiers of the updated subchannels, and the channel generation instruction includes the channel identifiers of the updated subchannels.

Optionally, in some possible implementations, the channel playing statistical information further includes playing frequencies of a plurality of channels.

The processing unit 402 is specifically configured to update the subchannels of the mosaic channel based on the play frequencies of the plurality of channels and the channel identifiers.

Optionally, in some possible implementations,
the sending unit 403 is further configured to send a mosaic channel list to the terminal, where the mosaic list includes information about the mosaic channel, and the information about the mosaic channel is used by the terminal to obtain the mosaic channel bitstream.

FIG. 5 is a schematic diagram of an embodiment of a mosaic generator according to this application. The mosaic generator may include:
a receiving unit 501, configured to receive a channel generation instruction, of a mosaic channel, sent by a video server, where the channel generation instruction includes channel identifiers of updated subchannels;
a processing unit 502, configured to generate a mosaic channel bitstream based on the channel generation instruction, where the mosaic channel bitstream includes information about the updated subchannels, and the information about the updated subchannels includes the channel identifiers of the updated subchannels; and
a sending unit 503, configured to send the mosaic channel bitstream to a terminal.

Optionally, in some possible implementations, the mosaic channel bitstream further includes indication information, and the indication information is used to indicate that the subchannels of the mosaic channel are updated.

Optionally, in some possible implementations,
the receiving unit 501 is further configured to obtain bitstreams of the updated subchannels based on the channel identifiers of the updated subchannels; and
the processing unit 502 is further configured to combine the bitstreams of the updated subchannels to obtain the mosaic channel bitstream.

Optionally, in some possible implementations,
the processing unit 502 is specifically configured to combine current video data and audio data based on layout information of the updated subchannels to obtain the mosaic channel bitstream.

Optionally, in some possible implementations, the mosaic channel bitstream further includes a program map table PMT, and the PMT includes the information about the updated subchannels.

FIG. 6 is a schematic diagram of an embodiment of a terminal according to this application. The terminal may include:
a receiving unit 601, configured to receive a mosaic channel bitstream;
a processing unit 602, configured to obtain information about subchannels of a mosaic channel from the mosaic channel bitstream; and
a playing unit 603, configured to play the mosaic channel bitstream.

Optionally, in some possible implementations,
the processing unit 602 is specifically configured to: decode the mosaic channel bitstream to obtain indication information carried in the mosaic channel bitstream; and when the processing unit determines, based on the indication information, that the subchannels of the mosaic channel corresponding to the mosaic channel bitstream are updated, obtain the information about the subchannels of the mosaic channel from the mosaic channel bitstream.

Optionally, in some possible implementations,
the receiving unit 601 is further configured to obtain a selection instruction after obtaining the information about the subchannels of the mosaic channel from the mosaic channel bitstream;
the processing unit 602 is further configured to select a target subchannel from the subchannels of the mosaic channel based on the selection instruction; and determine information about the target subchannel from the information about the subchannels of the mosaic channel;
the receiving unit 601 is further configured to obtain a bitstream of the target subchannel based on the information about the target subchannel; and
the playing unit 603 is further configured to decode and play the bitstream of the target subchannel.

Optionally, in some possible implementations, the terminal stores indication data of the mosaic channel,
the processing unit 602 is specifically configured to: if the indication data is different from the indication information, update the indication data to the indication information, and obtain the information about the subchannels of the mosaic channel from the mosaic channel bitstream.

Optionally, in some possible implementations,
the processing unit 602 is specifically configured to: if it is determined that the subchannels of the mosaic channel indicated by the indication information are updated, obtain the information about the subchannels of the mosaic channel from the mosaic channel bitstream.

Optionally, in some possible implementations,
the processing unit 602 is specifically configured to obtain the information about the subchannels of the mosaic channel from a program map table PMT of the mosaic channel bitstream.

Optionally, in some possible implementations,
the receiving unit 601 is further used by a video server to obtain a mosaic channel list, where the mosaic channel list includes information about the mosaic channel, and receive the mosaic channel bitstream from the mosaic generator based on the information about the mosaic channel.

Optionally, in some possible implementations, the terminal further includes:
a sending unit 604, configured to report channel playing information to the video server, so that the video server obtains channel playing statistical information of the terminal, where the channel playing statistical information includes a plurality of channel identifiers.

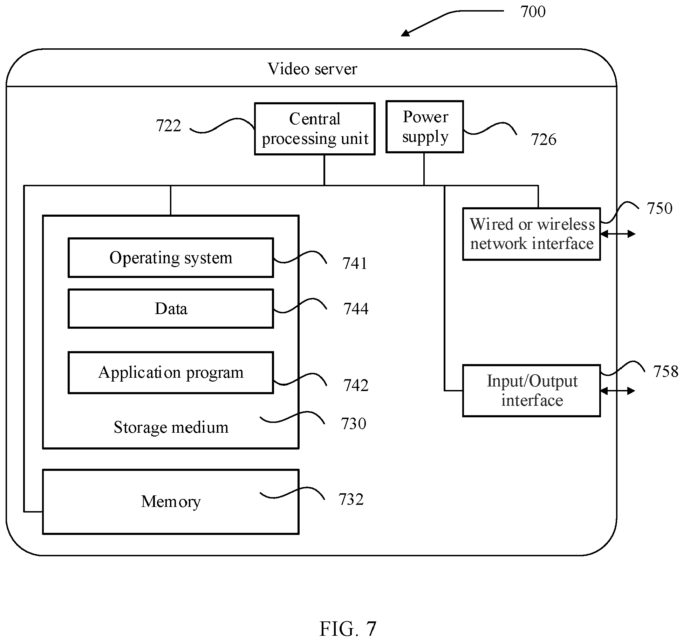

FIG. 7 is a schematic diagram of another embodiment of a video server according to an embodiment of this application. The video server 700 may have a relatively large difference due to different configurations or performance, and may include one or more central processing units (central processing units, CPU) 722 (for example, one or more processors) and a memory 732, and one or more storage media 730 storing an application program 742 or data 744 (for example, one or more mass storage devices). The memory 732 and the storage medium 730 may implement temporary or persistent storage. A program stored in the storage medium 730 may include at least one module (not shown in the figure), and each module may include a series of instruction operations for the video server. Still further, the central processing unit 722 may be configured to communicate with the storage medium 730, and perform, on the video server 700, a series of instruction operations in the storage medium 730.

The video server 700 may further include one or more power supplies 726, one or more wired or wireless network interfaces 750, one or more input and output interfaces 758, and/or one or more operating systems 741, for example, Windows ServerTM, Mac OS XTM, UnixTM, LinuxTM, or FreeBSDTM.

The specific steps performed by the video server in FIG. 2 or FIG. 3A and FIG. 3B in the foregoing embodiment may be based on the structure of the video server shown in FIG. 7.

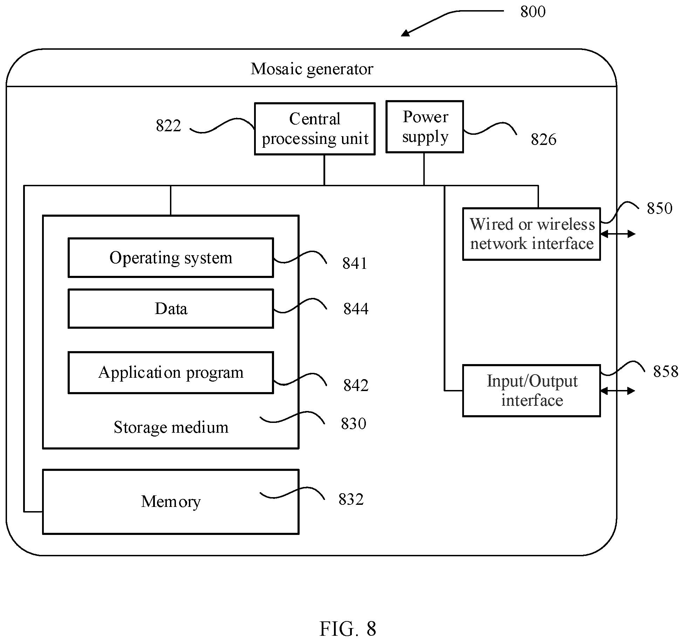

FIG. 8 is a schematic diagram of another embodiment of a mosaic generator according to an embodiment of this application. The mosaic generator 800 may have a relatively large difference due to different configurations or performance, and may include one or more central processing units (central processing units, CPU) 822 (for example, one or more processors) and a memory 832, and one or more storage media 830 storing an application program 842 or data 844 (for example, one or more mass storage devices). The memory 832 and the storage medium 830 may implement temporary or persistent storage. A program stored in the storage medium 830 may include at least one module (not shown in the figure), and each module may include a series of instruction operations for the mosaic generator. Still further, the central processing unit 822 may be configured to communicate with the storage medium 830, and perform, on the mosaic generator 800, a series of instruction operations in the storage medium 830.

The mosaic generator 800 may further include one or more power supplies 826, one or more wired or wireless network interfaces 850, one or more input and output interfaces 858, and/or one or more operating systems 841, for example, Windows ServerTM, Mac OS XTM, UnixTM, LinuxTM, or FreeBSDTM

The specific steps performed by the mosaic generator in FIG. 2 or FIG. 3A and FIG. 3B in the foregoing embodiment may be based on the structure of the mosaic generator shown in FIG. 8.

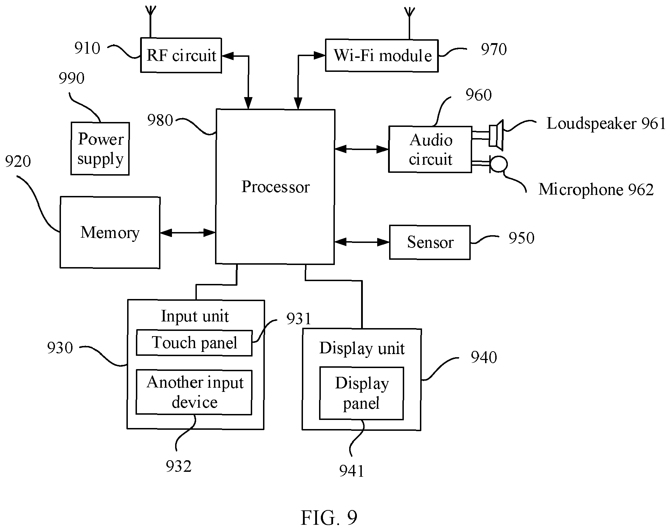

FIG. 9 is a schematic diagram of another embodiment of a terminal according to an embodiment of this application. The terminal may be a mobile phone or a tablet computer device.

For ease of description, only a part related to this embodiment of this application is shown. For technical details that are not disclosed, refer to the methods in the embodiments of this application. The terminal may be any terminal device, including a terminal device, a tablet computer, a PDA (Personal Digital Assistant, personal digital assistant), a POS (Point of Sales, point of sales), a vehicle-mounted computer, or the like.

FIG. 9 is a block diagram of a partial structure in which the terminal is a terminal according to the embodiments of this application. Referring to FIG. 9, the terminal includes components such as a radio frequency (Radio Frequency, RF) circuit 910, a memory 920, an input unit 930, a display unit 940, a sensor 950, an audio circuit 960, a wireless fidelity (Wireless Fidelity, Wi-Fi) module 970, a processor 980, and a power supply 990. A person skilled in the art may understand that the terminal structure shown in FIG. 9 does not constitute any limitation on the terminal. The terminal may include more or fewer components than those shown in the figure, or some components may be combined, or a different component deployment may be used.

The following describes the components of the terminal in detail with reference to FIG. 9.

The RF circuit 910 may be configured to receive and send a signal in an information receiving and sending process or a call process. In particular, after receiving downlink information from a base station, the RF circuit 910 sends the downlink information to the processor 980 for processing. In addition, the RF circuit 910 sends designed uplink data to the base station. Usually, the RF circuit 910 includes but is not limited to an antenna, at least one amplifier, a transceiver, a coupler, a low noise amplifier (Low Noise Amplifier, LNA), a duplexer, and the like. In addition, the RF circuit 910 may further communicate with a network and another device through wireless communication. Any communication standard or protocol may be used for the wireless communication, including but not limited to a global system for mobile communications (Global System of Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an e-mail, a short message service (Short Messaging Service, SMS), and the like.

The memory 920 may be configured to store a software program and a module, and the processor 980 executes various functional applications of the terminal and data processing by running the software program and the module stored in the memory 920. The memory 920 may mainly include a program storage area and a data storage area. The program storage area may store an operating system, an application program (such as a sound playing function or an image playing function) that is required by at least one function, and the like; and the data storage area may store data (such as audio data or a phonebook) that is created based on use of the terminal, and the like. In addition, the memory 920 may include a high speed random access memory, and may further include a nonvolatile memory, for example, at least one magnetic disk storage device, a flash memory device, or another volatile solid-state storage device.

The input unit 930 may be configured to receive input digit or character information, and generate a key signal input related to a user setting and function control of the terminal. Specifically, the input unit 930 may include a touch panel 931 and another input device 932. The touch panel 931, also referred to as a touchscreen, may collect a touch operation of the user on or near the touch panel 931 (such as an operation of the user on or near the touch panel 931 by using any suitable object or accessory such as a finger or a stylus), and drive a corresponding connection apparatus based on a preset program. Optionally, the touch panel 931 may include two parts: a touch detection apparatus and a touch controller. The touch detection apparatus detects a touch direction of the user, detects a signal brought by a touch operation, and transfers the signal to the touch controller. The touch controller receives touch information from the touch detection apparatus and converts the touch information into touch point coordinates, and then sends the touch point coordinates to the processor 980, and the touch controller can receive and execute a command sent by the processor 980. In addition, the touch panel 931 may be implemented in a plurality of types, such as a resistive type, a capacitive type, an infrared type, and a surface acoustic wave type. In addition to the touch panel 931, the input unit 930 may include the another input device 932. Specifically, the another input device 932 may include, but is not limited to, one or more of a physical keyboard, a function key (such as a volume control key or an on/off key), a trackball, a mouse, or a joystick.

The display unit 940 may be configured to display information entered by the user or information provided for the user, and various menus of the terminal. The display unit 940 may include a display panel 941. Optionally, the display panel 941 may be configured in a form of a liquid crystal display (Liquid Crystal Display, LCD), an organic light-emitting diode (Organic Light-Emitting Diode, OLED), or the like. Further, the touch panel 931 may cover the display panel 941. When detecting the touch operation on or near the touch panel 931, the touch panel 931 transmits the touch operation to the processor 980 to determine a type of a touch event, and then the processor 980 provides a corresponding visual output on the display panel 941 based on the type of the touch event. In FIG. 9, the touch panel 931 and the display panel 941 are used as two independent parts to implement input and output functions of the terminal. However, in some embodiments, the touch panel 931 and the display panel 941 can be integrated to implement the input and output functions of the terminal.

The terminal may further include at least one sensor 950 such as an optical sensor, a motion sensor, and other sensors. Specifically, the light sensor may include an ambient light sensor and a proximity sensor. The ambient light sensor may adjust luminance of the display panel 941 based on brightness of ambient light. The proximity sensor may turn off the display panel 941 and/or backlight when the terminal moves to an ear. As one type of the motion sensor, an accelerometer sensor may detect values of acceleration in various directions (usually on three axes). The accelerometer sensor may detect a value and a direction of gravity when the accelerometer sensor is in a static state, and may be applied to an application for recognizing a terminal posture (such as switching between a landscape screen and a vertical screen, a related game, and magnetometer posture calibration), a function related to vibration recognition (such as a pedometer and a knock), and the like. Other sensors such as a gyroscope, a barometer, a hygrometer, a thermometer, and an infrared sensor may be further configured in the terminal. Details are not described herein.

The audio frequency circuit 960, a loudspeaker 961, and a microphone 962 can provide an audio interface between the user and the terminal. The audio circuit 960 may convert received audio data into an electrical signal and transmit the electrical signal to the loudspeaker 961; and the loudspeaker 961 converts the electrical signal into a sound signal for output. In addition, the microphone 962 converts a collected sound signal into an electrical signal; the audio circuit 960 receives the electrical signal, converts the electrical signal into audio data, and then outputs the audio data to the processor 980; and the processor 980 processes the audio data and then sends the audio data to, for example, another terminal through the RF circuit 910, or outputs the audio data to the memory 920 for further processing.

Wi-Fi is a short-range wireless transmission technology, and the terminal may help, by using the Wi-Fi module 970, the user to send and receive an email, browse a web page, access streaming media, and the like. The Wi-Fi module 970 provides wireless broadband internet access for the user. Although FIG. 9 shows the Wi-Fi module 970, it may be understood that the Wi-Fi module 970 is not a mandatory component of the terminal, and the Wi-Fi module 970 may be omitted as required, provided that the scope of the essence of this application is not changed.

The processor 980 is a control center of the terminal, and connects all parts of the entire terminal through various interfaces and lines. By running or executing a software program and/or a module stored in the memory 920 and invoking data stored in the memory 920, the processor 980 performs various functions of the terminal and data processing, to perform overall monitoring on the terminal. Optionally, the processor 980 may include one or more processing units. Preferably, an application processor and a modem processor may be integrated into the processor 980. The application processor mainly processes an operating system, a user interface, an application program, and the like. The modem processor mainly processes wireless communication. It may be understood that the modem processor may alternatively not be integrated into the processor 980.

The terminal further includes the power supply 990 (such as a battery) that supplies power to the parts. Preferably, the power supply may be logically connected to the processor 980 through a power management system, so that functions such as charging and discharging management, and power consumption management are implemented through the power management system.

Although not shown in the figure, the terminal may further include a camera, a Bluetooth module, and the like. Details are not described herein.

In this embodiment of this application, the processor 980 included in the terminal may perform the steps performed by the terminal in FIG. 2, FIG. 3A, and FIG. 3B. In addition, in the foregoing steps of sending or receiving performed by the terminal in FIG. 2, FIG. 3A, and FIG. 3B, sending or receiving may be performed by the Wi-Fi module 970 or the RF circuit 910 of the terminal provided in FIG. 9.

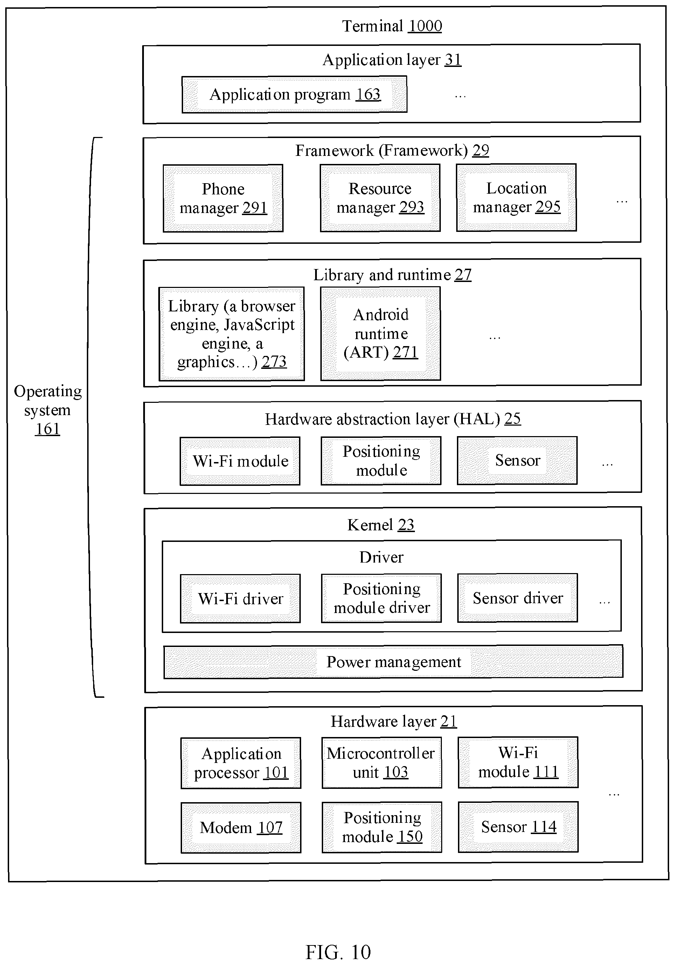

In an implementation, alternatively, a structure of the terminal may be shown in FIG. 10. The terminal may be any device that has a transceiving function. The terminal may be a mobile phone, a tablet computer, an in-vehicle mobile apparatus, a PDA (personal digital assistant, personal digital assistant), a camera, a wearable device, or the like. Certainly, a specific form of the terminal is not limited in the following embodiments. In addition, a system that may be carried by the terminal may include iOS®, Android®, Microsoft®, Linux®, or another operating system. This is not limited in this embodiment of this application.

A terminal 1000 running the Android® operating system is used as an example. As shown in FIG. 10, the terminal 1000 may be logically divided into a hardware layer 21, an operating system 161, and an application layer 31. The hardware layer 21 includes hardware resources such as an application processor 101, a microcontroller unit 103, a modem 107, a Wi-Fi module 111, a sensor 114, and a positioning module 150. The application layer 31 includes one or more application programs, for example, an application program 163. The application program 163 may be any type of application program such as a social application, an e-commerce application, or a browser. The operating system 161 is used as software middleware between the hardware layer 21 and the application layer 31, and is a computer program for managing and controlling hardware and a software resource.

In an embodiment, the operating system 161 includes a kernel 23, a hardware abstraction layer (hardware abstraction layer, HAL) 25, library and runtime (libraries and runtime) 27, and a framework (framework) 29. The kernel 23 is configured to provide an underlying system component and a service, for example, power management, memory management, thread management, or a hardware driver. The hardware driver includes a Wi-Fi driver, a sensor driver, a positioning module driver, or the like. The hardware abstraction layer 25 encapsulates a kernel driver, provides an interface for the framework 29, and shields implementation details of a lower layer. The hardware abstraction layer 25 runs in user space, and the kernel driver runs in kernel space.

The library and runtime 27 is also referred to as a runtime library, and provides a required library file and an execution environment for an executable program during running. The library and runtime 27 includes Android runtime (Android Runtime, ART) 271, a library 273, and the like. The ART 271 is a virtual machine or a virtual machine instance that can convert bytecode of an application program into machine code. The library 273 is a program library that provides support for the executable program during running, and includes a browser engine (for example, webkit), a script execution engine (for example, a JavaScript engine), a graphics processing engine, and the like.

The framework 29 is configured to provide various basic common components and services, such as window management and location management, for an application program at the application layer 31. The framework 29 may include a phone manager 291, a resource manager 293, a location manager 295, and the like.

All functions of components in the operating system 161 described above may be implemented by the application processor 101 by executing a program stored in a memory 105.

In addition, in FIG. 2, FIG. 3A, and FIG. 3B, steps performed by the terminal may be performed by the application processor 101 in the terminal, for example, generating a service request and extracting information in a service response. In addition, steps of sending or receiving the service request or the service response performed by the terminal may be sending or receiving performed by the Wi-Fi module 111 provided at the hardware layer in FIG. 10 or performed by another module or component that has a data transmission function.

A person skilled in the art may understand that the terminal 1000 may include fewer or more components than those shown in FIG. 10. The terminal shown in FIG. 10 includes only components more related to a plurality of implementations disclosed in the embodiments of this application.

In addition, in the implementations of this application, a network connection between the terminal and each of the video server and the mosaic generator may be established through a communications system corresponding to a wireless network or a wired network. Specifically, the communications system is, for example, code division multiple access (code division multiple access, CDMA), time division multiple access (time division multiple access, TDMA), frequency division multiple access (frequency division multiple access, FDMA), orthogonal frequency division multiple access (orthogonal frequency-division multiple access, OFDMA), single carrier frequency division multiple access (single carrier FDMA, SC-FDMA), or another system. The terms "system" and "network" can be interchanged with each other. A wireless technology such as universal terrestrial radio access (universal terrestrial radio access, UTRA) or CDMA2000 may be implemented in the CDMA system. UTRA may include a wideband CDMA (wideband CDMA, WCDMA) technology and another technology transformed from CDMA. CDMA2000 may cover interim standard (interim standard, IS) 2000 (IS-2000), IS-95, and IS-856. The TDMA system can implement wireless technologies such as global system for mobile communications (global system for mobile communication, GSM). The OFDMA system can implement wireless technologies such as evolved universal terrestrial radio access (evolved UTRA, E-UTRA), ultra mobile broadband (ultra mobile broadband, UMB), IEEE 802.11 (Wi-Fi), IEEE 802.16 (WiMAX), IEEE 802.20, and Flash OFDMA. UTRA corresponds to UMTS, and E-UTRA corresponds to an evolved release of UMTS. A new version of UMTS, namely, E-UTRA, is used in 3GPP long term evolution (long term evolution, LTE) and various versions evolved based on LTE. A fifth generation (5 Generation, "5G" for short) communications system and a new radio (New Radio, "NR" for short) are next-generation communications systems that are under research. In addition, the communications system is further applicable to a future-oriented communications technology, and may be applied to the technical solutions provided in the embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or another network device) to perform all or some of the steps of the methods described in the embodiments in FIG. 2 to FIG. 3A and FIG. 3B of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A channel playing method, comprising:
obtaining, by a video server, channel playing statistical information of a terminal, wherein the channel playing statistical information comprises a plurality of channel identifiers;
updating, by the video server, subchannels of a mosaic channel based on the channel identifiers in the channel playing statistical information; and
sending, by the video server, a channel generation instruction to a mosaic generator, wherein the channel generation instruction is used to instruct the mosaic generator to generate a mosaic channel bitstream that comprises the updated subchannels and channel identifiers of the updated subchannels, and the channel generation instruction comprises the channel identifiers of the updated subchannels.

2. The method according to claim 1, wherein the channel playing statistical information further comprises playing frequencies of a plurality of channels, and the updating, by the video server, subchannels of a mosaic channel based on the channel identifiers in the channel playing statistical information comprises:
updating, by the video server, the subchannels of the mosaic channel based on the play frequencies of the plurality of channels and the channel identifiers.

3. The method according to claim 1 or 2, wherein the method further comprises:
sending, by the video server, a mosaic channel list to the terminal, wherein the mosaic list comprises information about the mosaic channel, and the information about the mosaic channel is used by the terminal to obtain the mosaic channel bitstream.

4. A channel playing method, comprising:
receiving, by a terminal, a mosaic channel bitstream;
obtaining, by the terminal, information about subchannels of a mosaic channel from the mosaic channel bitstream; and
playing, by the terminal, the mosaic channel bitstream.

5. The method according to claim 4, wherein the obtaining, by the terminal, information about subchannels of a mosaic channel from the mosaic channel bitstream comprises:
decoding, by the terminal, the mosaic channel bitstream to obtain indication information carried in the mosaic channel bitstream; and
when the terminal determines, based on the indication information, that the subchannels of the mosaic channel corresponding to the mosaic channel bitstream are updated, obtaining, by the terminal, the information about the subchannels of the mosaic channel from the mosaic channel bitstream.

6. The method according to claim 5, wherein after the obtaining, by the terminal, information about subchannels of a mosaic channel from the mosaic channel bitstream, the method further comprises:
selecting, by the terminal, a target subchannel from the subchannels of the mosaic channel;
determining, by the terminal, information about the target subchannel from the information about the subchannels of the mosaic channel;
obtaining, by the terminal, a bitstream of the target subchannel based on the information about the target subchannel; and
decoding and playing, by the terminal, the bitstream of the target subchannel.

7. The method according to claim 5 or 6, wherein the terminal stores indication data of the mosaic channel, and the obtaining, by the terminal, information about subchannels of a mosaic channel from the mosaic channel bitstream based on the indication information comprises:
if the indication data is different from the indication information, updating, by the terminal, the indication data to the indication information, and obtaining, by the terminal, the information about the subchannels of the mosaic channel from the mosaic channel bitstream.

8. The method according to claim 5 or 6, wherein the obtaining, by the terminal, information about subchannels of a mosaic channel from the mosaic channel bitstream based on the indication information comprises:
when the terminal determines that the subchannels of the mosaic channel indicated by the indication information are updated, obtaining, by the terminal, the information about the subchannels of the mosaic channel from the mosaic channel bitstream.

9. The method according to any one of claims 4 to 8, wherein the obtaining, by the terminal, information about subchannels of a mosaic channel from the mosaic channel bitstream based on the indication information comprises:
obtaining, by the terminal, the information about the subchannels of the mosaic channel from a program map table PMT of the mosaic channel bitstream.

10. The method according to any one of claims 4 to 9, wherein the receiving, by a terminal, a mosaic channel bitstream comprises:
obtaining, by the terminal, a mosaic channel list from a video server, wherein the mosaic channel list comprises information about the mosaic channel; and
receiving, by the terminal, the mosaic channel bitstream from the mosaic generator based on the information about the mosaic channel.

11. The method according to any one of claims 4 to 10, wherein the method further comprises:
reporting, by the terminal, channel playing information to the video server, so that the video server obtains channel playing statistical information of the terminal, wherein the channel playing statistical information comprises a plurality of channel identifiers.

12. A channel playing method, comprising:
receiving, by a mosaic generator, a channel generation instruction, of a mosaic channel, sent by a video server, wherein the channel generation instruction comprises channel identifiers of updated subchannels;
generating, by the mosaic generator, a mosaic channel bitstream based on the channel generation instruction, wherein the mosaic channel bitstream comprises information about the updated subchannels, and the information about the updated subchannels comprises the channel identifiers of the updated subchannels; and
sending, by the mosaic generator, the mosaic channel bitstream to a terminal.

13. The method according to claim 12, wherein the mosaic channel bitstream further comprises indication information, and the indication information is used to indicate that subchannels of the mosaic channel are updated.

14. The method according to claim 12 or 13, wherein the generating, by the mosaic generator, a mosaic channel bitstream based on the channel generation instruction comprises:
obtaining, by the mosaic generator, bitstreams of the updated subchannels based on the channel identifiers of the updated subchannels; and
combining, by the mosaic generator, the bitstreams of the updated subchannels to obtain the mosaic channel bitstream.

15. The method according to claim 14, wherein the combining, by the mosaic generator, the bitstreams of the subchannels of the mosaic channel to obtain the mosaic channel bitstream comprises:
combining current video data and audio data based on layout information of the updated subchannels to obtain the mosaic channel bitstream.

16. The method according to any one of claims 12 to 15, wherein the mosaic channel bitstream further comprises a program map table PMT, and the PMT comprises the information about the updated subchannels.

17. A video server, comprising:
a receiving unit, configured to obtain channel playing statistical information of a terminal, wherein the channel playing statistical information comprises a plurality of channel identifiers;
a processing unit, configured to update subchannels of a mosaic channel based on the channel identifiers in the channel playing statistical information; and
a sending unit, configured to send a channel generation instruction to a mosaic generator, wherein the channel generation instruction is used to instruct the mosaic generator to generate a mosaic channel bitstream that comprises the updated subchannels and channel identifiers of the updated subchannels, and the channel generation instruction comprises the channel identifiers of the updated subchannels.

18. The video server according to claim 17, wherein the channel playing statistical information further comprises play frequencies of a plurality of channels; and
the processing unit is specifically configured to update the subchannels of the mosaic channel based on the play frequencies of the plurality of channels and the channel identifiers.

19. The video server according to claim 17 or 18, wherein
the sending unit is further configured to send a mosaic channel list to the terminal, wherein the mosaic list comprises information about the mosaic channel, and the information about the mosaic channel is used by the terminal to obtain the mosaic channel bitstream.

20. A terminal, comprising:
a receiving unit, configured to receive a mosaic channel bitstream;
a processing unit, configured to obtain information about subchannels of a mosaic channel from the mosaic channel bitstream; and
a playing unit, configured to play the mosaic channel bitstream.

21. The terminal according to claim 20, wherein
the processing unit is specifically configured to: decode the mosaic channel bitstream to obtain indication information carried in the mosaic channel bitstream; and when the processing unit determines, based on the indication information, that the subchannels of the mosaic channel corresponding to the mosaic channel bitstream are updated, obtain the information about the subchannels of the mosaic channel from the mosaic channel bitstream.

22. The terminal according to claim 21, wherein
the processing unit is further configured to: after obtaining the information about the subchannels of the mosaic channel from the mosaic channel bitstream, select a target subchannel from the subchannels of the mosaic channel based on the selection instruction; and determine information about the target subchannel from the information about the subchannels of the mosaic channel;
the receiving unit is further configured to obtain a bitstream of the target subchannel based on the information about the target subchannel; and
the playing unit is further configured to decode and play the bitstream of the target subchannel.

23. The terminal according to claim 21 or 22, wherein the terminal stores indication data of the mosaic channel, and the processing unit is specifically configured to:
if the indication data is different from the indication information, update the indication data to the indication information, and obtain the information about the subchannels of the mosaic channel from the mosaic channel bitstream.

24. The terminal according to claim 21 or 22, wherein
the processing unit is specifically configured to: if it is determined that the subchannels of the mosaic channel indicated by the indication information are updated, obtain the information about the subchannels of the mosaic channel from the mosaic channel bitstream.

25. The terminal according to any one of claims 20 to 24, wherein
the processing unit is specifically configured to obtain the information about the subchannels of the mosaic channel from a program map table PMT of the mosaic channel bitstream.

26. The terminal according to any one of claims 20 to 25, wherein
the receiving unit is further used by a video server to obtain a mosaic channel list, wherein the mosaic channel list comprises information about the mosaic channel, and receive the mosaic channel bitstream from the mosaic generator based on the information about the mosaic channel.

27. The terminal according to any one of claims 20 to 26, wherein the terminal further comprises:
a sending unit, configured to report channel playing information to the video server, so that the video server obtains channel playing statistical information of the terminal, wherein the channel playing statistical information comprises a plurality of channel identifiers.

28. A mosaic generator, comprising:
a receiving unit, configured to receive a channel generation instruction, of a mosaic channel, sent by a video server, wherein the channel generation instruction comprises channel identifiers of updated subchannels;
a processing unit, configured to generate a mosaic channel bitstream based on the channel generation instruction, wherein the mosaic channel bitstream comprises information about the updated subchannels, and the information about the updated subchannels comprises the channel identifiers of the updated subchannels; and
a sending unit, configured to send the mosaic channel bitstream to a terminal.

29. The mosaic generator according to claim 28, wherein the mosaic channel bitstream further comprises indication information, and the indication information is used to indicate that subchannels of the mosaic channel are updated.

30. The mosaic generator according to claim 28 or 29, wherein
the receiving unit is further configured to obtain bitstreams of the updated subchannels based on the channel identifiers of the updated subchannels; and
the processing unit is further configured to combine the bitstreams of the updated subchannels to obtain the mosaic channel bitstream.

31. The mosaic generator according to claim 30, wherein
the processing unit is specifically configured to combine current video data and audio data based on layout information of the updated subchannels to obtain the mosaic channel bitstream.

32. The mosaic generator according to any one of claims 28 to 31, wherein the mosaic channel bitstream further comprises a program map table PMT, and the PMT comprises the information about the updated subchannels.

33. A video server, comprising:
a processor and a memory, wherein
the memory stores program code; and
the processor performs the steps of the method according to any one of claims 1 to 3 when invoking the program code in the memory.

34. A terminal, comprising:
a processor and a memory, wherein
the memory stores program code; and
the processor performs the steps of the method according to any one of claims 4 to 11 when invoking the program code in the memory.

35. A mosaic generator, comprising:
a processor and a memory, wherein
the memory stores program code; and
the processor performs the steps of the method according to any one of claims 12 to 16 when invoking the program code in the memory.

36. A channel playing system, comprising a video server, a mosaic generator, and a terminal, wherein
the video server is configured to perform the steps performed by the video server according to any one of claims 1 to 3;
the terminal is configured to perform the steps performed by the terminal according to any one of claims 4 to 11; and
the mosaic generator is configured to perform the steps performed by the mosaic generator according to any one of claims 12 to 16.

37. A computer-readable storage medium, comprising an instruction, wherein when the instruction is run on a computer, the computer is enabled to perform the method according to any one of claims 1 to 16.
